# EUROPEAN PATENT APPLICATION

(11) **EP 2 371 627 A1**
(43) Date of publication of application: **05.10.2011**
(21) Application number: 10829459.6
(22) Date of filing: 25.06.2010
(51) Int. Cl.: B60R 11/02, H04N 5/64

(54) **ONBOARD TV FOR RAILWAY VEHICLE**

(30) Priority: 16.11.2009 CN 200910222358
(71) Applicant: Qingdao Sifang Rolling Stock Research Institute Co., Ltd., Qingdao, Shandong 266000 (CN)
(72) Inventor: MA, Fei, Qingdao Shandong 266000 (CN); CHEN, Jie, Qingdao Shandong 266000 (CN); PANG, Yuanfeng, Qingdao Shandong 266000 (CN); LI, Dewen, Qingdao Shandong 266000 (CN); WANG, Changchang, Qingdao Shandong 266000 (CN)
(74) Representative: Price, Nigel John King
(86) International application number: PCT/CN2010/074452
(87) International publication number: WO 2011/057495

(57) **Abstract**

The present invention relates to a on-board TV on railway vehicle that is mounted on a ceiling of a passenger cart, the on-board TV comprises a video display, a triangle support frame and cover plates, where the video display is assembled on the triangular support frame, the cover plates are mounted at two sides of the video display; a mount board is provided in the video display, a circuit board is mounted on one side of the mount board and a display screen is mounted on the other side of the mount board; a power supply/signal input board, an LED control board and a backlight high voltage transformer are provided on the circuit board. The present invention has a simple and reasonable structure, high reliability, an appealing appearance, and practicality; the video display is mounted on the triangular support frame, such that the display inclines downwards a certain angle to satisfy the watching angle of passengers, and meanwhile the video display is compatible and exchangeable. The present invention has a metal casing, which is solid and wearable. Further, the edge portions is arranged as fillet and the surface is smooth, thus it guarantees that the passengers will not be injured due to collision; meanwhile, a power supply protection and a conversion circuit are also provided, such that the TV will not fail due to collision with passengers.

## Description

### FIELD OF THE TECHNOLOGY

The present invention relates to a video entertainment system on railway vehicle, and more specifically, relates to an on-board TV in a video entertainment system on railway vehicle.

### BACKGROUND OF THE INVENTION

With the development of information technology and the gradual upgrade of train facilities, the audio/video entertainment system is introduced into a train, which improves the traveling environment and is an important means of enhancing the added value and competitiveness of railway passenger services. As a main terminal device of the audio/video entertainment system, the on-board TV directly faces the passengers, and its human-machine friendliness and running reliability will affect the passengers' feeling on train comfort. Currently, the on-board TV is designed to be rotatable and foldable: a small motor is provided inside, and when activating signals to the TV, the motor turn clockwise to lower down the screen from an angle parallel to the ceiling, and meanwhile, the screen displays images; when closing signals to the TV, the motor turns counterclockwise to fold the screen, and meanwhile the screen enters the standby state. However, the train ceiling is rather high, and the screen, when being lowered down, approaches a 90° angle to the ground, causing the passengers nearby cannot watch the programs clearly due to the narrow downwards angle of visibility of the liquid crystal screen; additionally, as its casing is made of plastics, the crowds in the train may accidentally collide with the TV (for example, when lifting a luggage). And the TV is likely being damaged during the serving life of more than ten years of the train. If the TV is collided when being lowered down or folded, the rotation of the motor might be blocked to thereby cause failure.

### SUMMARY OF THE INVENTION

The subject of the present invention is to provide a on-board TV on railway vehicle to address the problems existing in the conventional on-board TV, such as poor view of the programs due to narrow downwards angle of visibility of the liquid crystal screen, susceptibility to damage and failure, and the on-board TV on railway vehicle according to the present invention has a simple and suitable structure, a wide view angle, an appealing appearance, practicality, high reliability, and a video display screen that is compatible and exchangeable.

A technical solution of the present invention is: a on-board TV on railway vehicle mounted on a ceiling of a passenger cart, the on-board TV comprises a video display, a triangle support frame and cover plates, wherein the video display is assembled on the triangular support frame, the cover plates are mounted at two sides of the video display; a mount board is provided in the video display, a circuit board is mounted on one side of the mount board and a display screen is mounted on the other side of the mount board; a power supply/ signal input board, an LED control board and a backlight high voltage transformer are provided on the circuit board, the video signal that is output from the power supply/signal input board is transmitted to the LED control board, converted into digital information via the video A/D converter, processed through a video operating circuit, and then transmitted to the LVDS interface to be displayed by the display screen and to control the backlight high voltage transformer to switch on or off a code cathode fluorescent lamp (CCFL) as the backlight tube or adjust the light intensity of the CCFT backlight.

Preferably, the on-board TV is mounted on a ceiling at the end of a passenger cart, the on-board TV comprises a video display, the video display is assembled on an inverted right triangle support frame, a hook is provided on the back of the display and connected to a mount frame at the top of the passenger cart through a safety tie; a square backboard is provided on the rear part of the display; two triangular cover plates are mounted at the side surfaces of the display.

Preferably, the on-board TV is mounted on a ceiling in the middle of a passenger card, the on-board TV comprises two video displays that are assembled back-to-back on an inverted angular support frame, two triangular cover plates are mounted on the side faces of the displays, the power supplies of the two displays converges on a wall outlet connector through a terminal row for connecting to the power supply as provided by the vehicle; the support frame bonds and secures simultaneously a cable from the video output of a video display to the video input of the other video display, and the display is connected to a mount frame at the passenger cart top through a safety tie.

Preferably, the power supply/ signal input board comprises an EMC filter, a over-voltage/ under-voltage protection circuit, a temperature monitoring circuit, a power supply module and a video distribution circuit; the circuit board is further provided with a remote control receiver.

Preferably, the on-board TV has a metal casing made of aluminum alloy or carbon steel, where the outer surface of the casing has no protrusions, and the edge portions of the casing are arranged as fillet.

Preferably, the frame of the video display is formed by fitting curve-shaped sectional materials.

Preferably, a top plate and a bottom plate is further mounted on the video display.

The advantageous effects of the present invention lie in that the present invention has a simple and reasonable structure, high reliability, an appealing appearance and, practicality, the video display is mounted on the triangular support frame, such that the display inclines downwards a certain angle to satisfy the watching angle of passengers, and meanwhile the video display is compatible and exchangeable. The present invention has a metal casing made of aluminum alloy or carbon steel, which is solid and wearable. Further, the outer surface has no protrusions, with the edge portions being arranged as fillet and the surface being smooth, thus it guarantees that the passengers will not be injured due to collision; meanwhile, a power supply protection and a conversion circuit are also provided, such that the TV will not fail due to collision with passengers.

### BRIEF DESCRIPTION OF THE DRAWINGS

Fig. 1 is a structural diagram of one embodiment according to the present invention;

Fig. 2 is a cross sectional structural diagram of another embodiment according to the present invention;

Fig. 3 is an A-A cross sectional structural diagram of Fig. 2 according to the present invention;

Fig. 4 is a structural block diagram of a video display according to embodiments of the present invention.

### DETAILED DESCRIPTION OF THE PREFERRED EMBODIMENTS

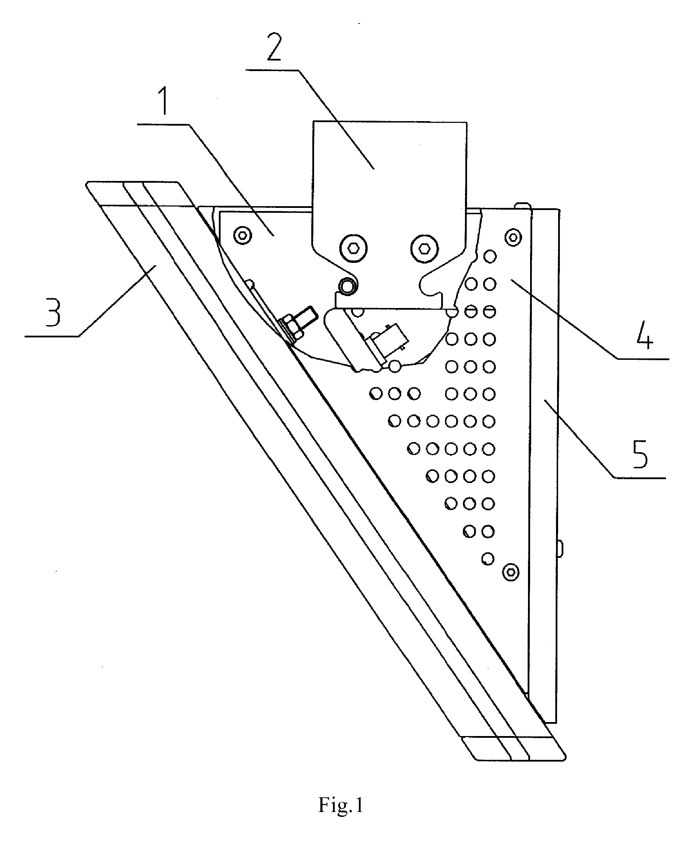

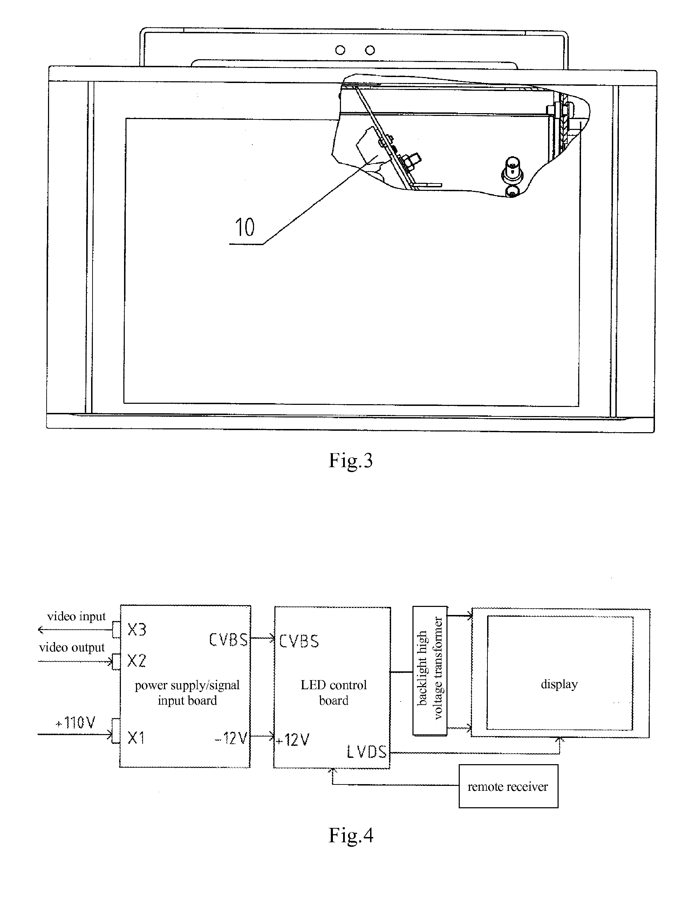

Embodiment 1: as illustrated in Figs. 1 and 4, an on-board single TV on railway vehicle is mounted on a ceiling at the end of a passenger cart. The on-board single TV comprises a video display 3, an inverted triangle support frame 1 and two triangle cover plates 4, wherein the video display 3 is assembled on the inverted triangular support frame 1, the cover plates 4 are mounted at two sides of the video display 3; a hook is provided on the back portion of the display 3 and connected to a mount frame 2 at the top of the passenger cart through a safety tie; a square back plate 5 is mounted on the back portion of the display 3. The on-board single TV has a metal casing made of aluminum alloy or carbon steel, wherein the outer surface of the casing has no protrusions, and the edge portions of the casing are arranged as fillet; the frame of the video display is formed by fitting curve-shaped sectional materials. A mount board is provided in the video display 3, a circuit board is mounted on one side of the mount board, a liquid crystal display is mounted on one the other side of the mount board, and a top plate and a bottom plate is further mounted on the mount board; a power supply/ signal input board, an LED control board and a backlight high voltage transformer are provided on the circuit board; the power supply/ signal input board comprises an EMC filter, an over voltage/ under voltage protection circuit, a temperature monitoring circuit, a power supply module and a video distribution circuit; the circuit board is further provided with a remote receiver for facilitating a tester to perform certain adjustment to the light and color of the display.

When working, the video signal that is output from the power supply/ signal input board is transmitted to the LED control board, converted into digital information via the video A/D converter, processed through a video operating circuit and then transmitted to the LVDS interface to be displayed by the display screen and to control the backlight high voltage transformer to switch on or off a code cathode fluorescent lamp (CCFL) as the backlight tube or adjust the light intensity of the CCFT backlight; through the backlight high voltage transformer, a DC 12V power supply is transformed to a high voltage to supply power to the CCFT backlight tube in the display.

Wherein, the display may be a plasma screen, OLED, and other panel display; the remote control operation may be changed as key operation; the input signal may be changed to a computer VGA signal, an HDMI high-definition signal or a CMMB radio digital broadcast TV signal.

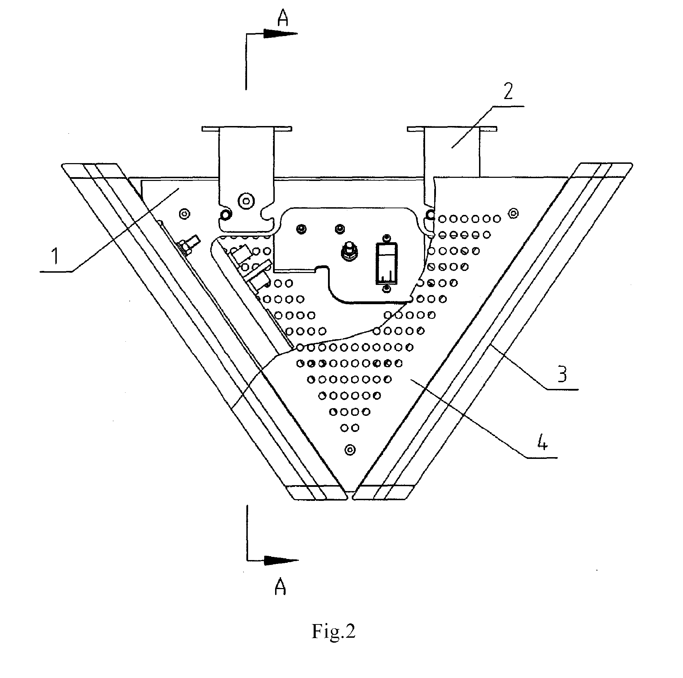

Embodiment 2: as illustrated in Figs. 2, 3, 4, an on-board dual TV on railway vehicle is mounted on a ceiling in the middle of a passenger cart. The on-board dual TV comprises two video displays 3, an inverted triangular support frame 1 and two triangular cover plates 4, wherein the video displays 3 are assembled on the inverted triangular support frame 1, the cover plates 4 are mounted at two sides of the video displays 3, the power supplies of two displays converge on a wall outlet connector through a terminal row 10 for connecting to the power supply as provided by the vehicle; the support frame 1 bonds and secures simultaneously a cable from the video output of one video display to the video input of the other video display, and the displays 3 are connected to a mount frame 2 at the top of the passenger cart through a safety tie. The on-board dual TVs have a metal casing made of aluminum alloy or carbon steel, where the outer surfaces of the casing has no protrusions, and the edge portions are arranged as fillet; the frame of the video displays is formed by fitting curve-shaped sectional materials. A mount board is provided in the video display 3, a circuit board is mounted on one side of the mount board, a liquid crystal display is mounted on one the other side of the mount board, and a top plate and a bottom plate is further mounted on the mount board; a power supply/ signal input board, an LED control board and a backlight high voltage transformer are provided on the circuit board; the power supply/signal input board comprises an EMC filter, an over voltage/ under voltage protection circuit, a temperature monitoring circuit, a power supply module and a video distribution circuit; the circuit board is further provided with a remote receiver for facilitating a tester to perform certain adjustment to the light and color of the display.

When working, the video signal that is output from the power supply/ signal input board is transmitted to the LED control board, converted into digital information via the video A/D converter, then processed through a video operating circuit and transmitted to the LVDS interface to be displayed by the display screen and to control the backlight high voltage transformer to switch on or off a code cathode fluorescent lamp (CCFL) as the backlight tube or adjust the light intensity of the CCFT backlight; through the backlight high voltage transformer, a DC 12V power supply is transformed to a high voltage to supply power to the CCFT backlight tube in the display.

Wherein, the display may be a plasma screen, OLED, and other panel display; the remote control operation may be changed as key operation; the input signal may be changed to a computer VGA signal, an HDMI high-definition signal or a CMMB radio digital broadcast TV signal.

## Claims

1. An on-board TV on railway vehicle, mounted on a ceiling of a passenger cart, **characterized in that** the on-board TV comprises a video display, a triangle support frame and cover plates, where the video display is assembled on the triangular support frame, the cover plates are mounted at two sides of the video display; a mount board is provided in the video display, a circuit board is mounted on one side of the mount board and a display screen is mounted on the other side of the mount board; a power supply/ signal input board, an LED control board and a backlight high voltage transformer are provided on the circuit board, the video signal that is output from the power supply/ signal input board is transmitted to the LED control board, converted into digital information via the video A/D converter, processed through a video operating circuit, and then transmitted to the LVDS interface to be displayed by the display screen and to control the backlight high voltage transformer to switch on or off a code cathode fluorescent lamp (CCFL) as the backlight tube or adjust the light intensity of the CCFT backlight.

2. The on-board TV on railway vehicle according to claim 1, **characterized in that** the on-board TV is mounted on a ceiling at the end of a passenger cart, the on-board TV comprises a video display, the video display is assembled on an inverted right triangle support frame, a hook is provided on the back of the display and connected to a mount frame at the top of the passenger cart through a safety tie; a square backboard is provided on the rear part of the display; two triangular cover plates are mounted at the side surfaces of the display.

3. The on-board TV on railway vehicle according to claim 1, **characterized in that** the on-board TV is mounted on a ceiling in the middle of a passenger card, the on-board TV comprises two video displays that are assembled back-to-back on an inverted angular support frame, two triangular cover plates are mounted on the side faces of the displays, the power supplies of the two displays converges on a wall outlet connector through a terminal row for connecting to the power supply as provided by the vehicle; the support frame bonds and secures simultaneously a cable from the video output of a video display to the video input of the other video display, and the display is connected to a mount frame at the passenger cart top through a safety tie.

4. The on-board TV on railway vehicle according to claim 1, **characterized in that** the power supply/ signal input board comprises an EMC filter, a over-voltage/ under-voltage protection circuit, a temperature monitoring circuit, a power supply module and a video distribution circuit; the circuit board is further provided with a remote control receiver.

5. The on-board TV on railway vehicle according to any one of claims 1 to 3, **characterized in that** the on-board TV has a metal casing made of aluminum alloy or carbon steel, where the outer surface of the casing has no protrusions, and the edge portions of the casing are arranged as fillet.

6. The on-board TV on railway vehicle according to any one of claims 1 to 3, **characterized in that** the frame of the video display is formed by fitting curve-shaped sectional materials.

7. The on-board TV on railway vehicle according to any one of claims 1 to 3, **characterized in that** a top plate and a bottom plate is further mounted on the video display.
